# EUROPÄISCHE PATENTSCHRIFT

(11) **EP 2 189 242 B1**
(45) Veröffentlichungstag und Bekanntmachung des Hinweises auf die Patenterteilung: **14.12.2011**
(21) Anmeldenummer: 09173157.0
(22) Anmeldetag: 15.10.2009
(51) Int. Cl.: B23Q 17/00, B23B 31/26

(54) **Werkzeugspannvorrichtung**
Tool clamping device
Dispositif de serrage d'outil

(30) Priorität: 20.11.2008 DE 102008058185
(43) Veröffentlichungstag der Anmeldung: 26.05.2010
(73) Patentinhaber: Ott-Jakob Spanntechnik GmbH, 87663 Lengenwang (DE)
(72) Erfinder: Gast, Stephan, 86987 Schwabsoien (DE); Bonerz, Stefan, 87600 Kaufbeuren (DE); Bechteler, Wolfgang, 87640 Ebenhofen (DE)
(74) Vertreter: Charrier, Rapp & Liebau

(56) Entgegenhaltungen:
- EP-A1- 1 938 922
- DE-A1- 2 952 636
- DE-T5-112004 001 389
- JP-A- 4 008 454

## Beschreibung

Die Erfindung betrifft eine Werkzeugspannvorrichtung nach dem Oberbegriff des Anspruchs 1. Aus der DE 100 43 006 C1 ist eine Werkzeugspannvorrichtung bekannt, bei der ein Paket von Tellerfedern eine Zugkraft zum Spannen eines Werkzeugs oder Werkzeughalters in einer Werkzeugaufnahme durch einen Satz von Spannzangensegmenten bereitstellt. Das Lösen des Werkzeugs erfolgt durch eine axiale Verschiebung einer sogenannten Zugstange, die hierzu mit einer entsprechenden Gegenkraft beaufschlagt werden muss. Diese Gegenkraft wird als Druckkraft mittels eines hydraulisch oder pneumatisch angetriebenen Kolbens auf die der Werkzeugaufnahme abgewandte Stirnfläche der Zugstange aufgebracht. Der Kolben wird daher als Werkzeuglösekolben bezeichnet. Alternativ hierzu wurde in der DE 10 2004 051 031 B3 auch die Verwendung eines elektrischen Antriebs zur Verschiebung des Werkzeuglösekolbens vorgeschlagen.

Zum Spannen eines Werkzeugs wird der Werkzeuglösekolben von seiner aktiven Stellung, in der er die Zugstange gegen die Kraft des Tellerfedernpaketes auslenkt und dadurch die Werkzeugspannvorrichtung in Lösestellung versetzt, in seine inaktive Stellung gefahren, in der er nicht mit der Zugstange in Kontakt steht. Da die Zugstange beim Betrieb der Arbeitsspindel, deren Bestandteil die Werkzeugspannvorrichtung ist, rotiert, während der Werkzeuglösekolben stillsteht, darf beim Anfahren der Arbeitsspindel kein Kontakt mehr zwischen der Zugstange und dem Werkzeuglösekolben bestehen. Um dies zu gewährleisten, muss nach der Ausgabe des entsprechenden Kommandos durch die Steuereinheit der Bearbeitungsmaschine eine vorbestimmte Zeitspanne, welche die Absetzbewegung des Werkzeuglösekolbens von der Zugstange maximal dauern kann, abgewartet werden, bevor die Arbeitsspindel angefahren werden kann. Dies bedeutet eine gewisse Verzögerung im Arbeitsablauf der Bearbeitungsmaschine.

Im Falle einer Fehlfunktion in Form einer zu langsamen oder unvollständigen Absetzbewegung des Werkzeuglösekolbens von der Zugstange infolge fehlerhafter Druckverhältnisse im Fall eines hydraulischen oder pneumatischen Antriebs des Kolbens oder infolge einer fehlerhaften Ablaufsteuerung durch die Steuereinheit der Bearbeitungsmaschine kann es dazu kommen, dass die Arbeitsspindel angefahren wird, obwohl sich der Werkzeuglösekolben noch in Kontakt mit der Zugstange befindet. Dies kann im Extremfall zu einem Reibverschweißen des Werkzeuglösekolbens mit der Zugstange an den jeweiligen Druckauflageflächen, d.h. zu einer Beschädigung der Werkzeugspannvorrichtung führen.#

Die DE 11 2004 001 389 T5 lehrt eine Vorrichtung zum Ermitteln einer Position einer Kupplungsstange einer automatischen Werkzeugwechselvorrichtung, welche eine Spule und einen an der Kupplungsstange angeordneten Magnetkern umfasst. Durch eine axiale Verschiebung der Kupplungsstange ändert sich die Position des Magnetkerns gegenüber der Spule und dadurch deren Induktivität. Diese Induktivitätsänderung wird über einen LC-Schwingkreis ausgewertet, dessen Bestandteil die Spule ist.

Die JP- 04-8454 zeigt eine Vorrichtung zur Detektion des mechanischen Kontaktes einer Palette mit einem Anschlag in einer Werkzeugmaschine. In den Anschlag sind isolierte Elektroden eingelassen, welche die elektrisch leitfähige Palette elektrisch kontaktieren, wenn sie am Anschlag anliegt. Anhand dieses elektrischen Kontaktes wird der korrekte Sitz der Palette am Anschlag festgestellt.

Aus der EP 1 938 922 A1 ist eine Werkzeugspannvorrichtung nach dem Oberbegriff des Anspruchs 1 bekannt, die mit einem kapazitiven oder induktiven Näherungssensor zur Detektion der axialen Position der Zugstange ausgerüstet ist. Der Sensor ist so in die Werkzeugmaschine eingebaut ist, dass er die axiale Position der Zugstange über seinen Abstand von einer koaxial und integral mit der Zugstange ausgebildeten konischen Oberfläche erfasst. Das Dokument behandelt ausführlich die Steuerung der Maschine in Abhängigkeit von der erfassten Position der Zugstange, geht jedoch nicht näher auf den Sensor als solchen ein.

In Anbetracht dieses Standes der Technik ist es die Aufgabe der vorliegenden Erfindung, für eine gattungsgemäße Werkzeugspannvorrichtung einen neuen und zweckmäßigen Sensor zur Erfassung der Position des Betätigungsgliedes zu schaffen, um eine hohe Funktionssicherheit und einen schnellen Ablauf eines Werkzeugwechsels zu gewährleisten.

Diese Aufgabe wird erfindungsgemäß durch eine Werkzeugspannvorrichtung mit den Merkmalen des Anspruchs 1 gelöst. Vorteilhafte Ausgestaltungen der Erfindung sind in den Unteransprüchen angegeben.

Erfindungsgemäß wird die Position des Werkzeuglösekolbens durch einen Sensor erfasst, der baulich in die Werkzeugspannvorrichtung integriert ist. Diese Maßnahme löst das Problem, dass ein Einsatz fertig erhältlicher Positionssensoren für Hydraulik- bzw. Pneumatikzylinder durch die besonderen räumlichen Gegebenheiten einer zum Einbau in eine Arbeitsspindel bestimmten Werkzeugspannvorrichtung, wie insbesondere des Vorhandenseins einer drehbaren Schmiermittelzuführung, massiv behindert wird. Die weiterhin erfindungsgemäß vorgesehene Funktion des Werkzeuglösekolbens als unmittelbarer Bestandteil eines elektrischen Bauelementes gewährleistet einerseits die Funktionssicherheit der Positionserfassung und vereinfacht andererseits den Aufbau des Sensors. Vorteilhafte Wirkungen der Erfindung sind eine Verringerung unplanmäßiger Spindelstillstandzeiten bzw. eine sichere Ablauffolge während des Werkzeugwechsels. Des weiteren sind durch die Rückmeldung der Kolbenposition Ablaufoptimierungen möglich, die zu einem Zeitgewinn pro gefertigtem Teil führen können.

Die Werkzeugspannvorrichtung der Erfindung umfaßt eine elektrische Kapazität, bei welcher ein Abschnitt des Werkzeuglösekolbens aufgrund seiner metallischen Leitfähigkeit als Kondensatorelektrode fungiert. Durch eine Querschnittsänderung besagten Abschnitts entlang der Bewegungsrichtung des Kolbens kann eine Abhängigkeit des Elektrodenabstandes und damit des Kapazitätswertes von der Kolbenposition erzielt werden.

Weitere Einzelheiten und Vorteile der Erfindung offenbart die nachfolgende Beschreibung von Ausführungsbeispielen anhand der Zeichnungen. In diesen zeigt
- Fig. 1: einen Längsschnitt eines Teils einer Werkzeugspannvorrichtung in Spannstellung,
- Fig. 2: einen Längsschnitt des Teils von Fig. 1 in Lösestellung,
- Fig. 3: einen Längsschnitt eines Teils einer mit einer keinen Teil der Erfindung bildenden, ersten Art von Sensorik ausgerüsteten Werkzeugspannvorrichtung in Spannstellung,
- Fig. 4: einen Längsschnitt des Teils von Fig. 3 in Lösestellung,
- Fig. 5: einen den Ausschnitt X aus Fig. 3 in vergrößerter Darstellung,
- Fig. 6: eine Auswerteschaltung für die in Fig. 3-5 dargestellte Sensorik,
- Fig. 7: einen Längsschnitt eines Teils einer mit einer Ausführungsform der Erfindung ausgerüsteten Werkzeugspannvorrichtung in Spannstellung,
- Fig. 8: eine Auswerteschaltung für die in Fig. 7 dargestellte Ausführungsform und
- Fig. 9: einen Längsschnitt eines Teils einer mit einer keinen Teil der Erfindung bildenden, dritten Art von Sensorik ausgerüsteten Werkzeugspannvorrichtung in Spannstellung.

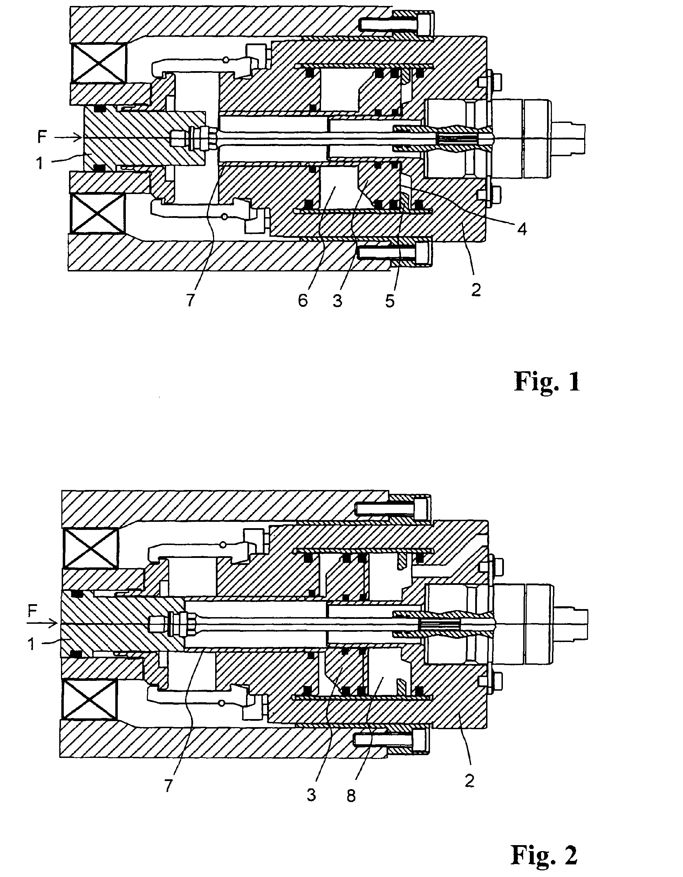

Zunächst sei die grundsätzliche Funktion einer Werkzeugspannvorrichtung der hier zugrundegelegten Art anhand der Figuren 1 und 2, die jeweils den für die vorliegende Erfindung relevanten Teil einer solchen Vorrichtung zeigen, hinsichtlich der Betätigung des Lösens des Werkzeugs aus der Werkzeugaufnahme kurz erläutert. In der in Fig. 1 gezeigten Spannstellung übt ein nicht gezeigtes Tellerfedernpaket eine Kraft F auf eine verschiebbar gelagerte Zugstange 1, von der in den Figuren 1 und 2 nur das der ebenfalls nicht gezeigten Werkzeugaufnahme abgewandte, hintere Ende zu sehen ist, aus und hält die Zugstange 1 in der in Fig. 1 gezeigten Position. Eine mechanische Kopplung zwischen der Zugstange 1 und den Spannzangensegmenten der Werkzeugaufnahme sorgt in dieser Stellung für die Spannung eines Werkzeugs oder Werkzeughalters in der Werkzeugaufnahme.

Axial benachbart zu dem Ende der Zugstange 1 ist ein Hydraulikzylinder 2 mit einem ringförmigen Innenraum angeordnet, in dem ein ringförmiger Kolben 3, der sogenannte Werkzeuglösekolben 3 verschiebbar gelagert ist. Der Werkzeuglösekolben 3 befindet sich in der Spannstellung nach Fig. 1 am hinteren Ende seines Bewegungsbereiches und liegt mit seiner hinteren Stirnseite 4 an einem Anschlag 5 an. Eine vordere Kammer 6 in dem Hydraulikzylinder 2 ist in diesem Fall mit einer unter Druck stehenden Flüssigkeit gefüllt und drückt den Werkzeuglösekolben 3 gegen den Anschlag 5. Der Werkzeuglösekolben 3 weist einen sich in Richtung der Zugstange 1 erstreckenden hohlzylinderförmigen Abschnitt 7 auf, der jedoch in dieser Stellung des Werkzeuglösekolbens 3 einen Abstand von dem hinteren Ende der Zugstange 1 hat.

In der in Fig. 2 gezeigten Lösestellung ist der Werkzeuglösekolben 3 gegenüber der Spannstellung von Fig. 1 durch Füllung einer hinteren Kammer 8 in dem Hydraulikzylinder 2 mit einer unter Druck stehenden Flüssigkeit in axialer Richtung gegen die Zugstange 1 verschoben, so dass sich das vordere Ende des hohlzylindrischen Abschnitts 7 des Werkzeuglösekolbens 3 in Kontakt mit dem hinteren Ende der Zugstange 1 befindet und eine gegen die Kraft F des Tellerfedernpaketes gerichtete Gegenkraft auf die Zugstange 1 ausübt. Diese ist hierdurch gegenüber der Spannstellung von Fig. 1 in axialer Richtung, und zwar in der Darstellung der Figuren 1 und 2 nach links in Richtung der Werkzeugaufnahme verschoben, wodurch die Spannzangensegmente das Werkzeug freigeben und ein Werkzeugwechsel ermöglicht wird.

Da sich die Zugstange 1 im Betrieb der Arbeitsspindel dreht, der Werkzeuglösekolben 3 jedoch stillsteht, ist es von Interesse, die Position des Werkzeuglösekolbens 3 zu überwachen, insbesondere festzustellen, ob er sich in der Endposition nach Fig. 1 und somit in einem Abstand von der Zugstange 1 befindet oder nicht. Das Erreichen besagter Endposition durch den Werkzeuglösekolben 3 ist ein sicheres Indiz für das Vorliegen des Spannzustandes, in dem die Arbeitsspindel nach einem Werkzeugwechsel wieder angefahren werden kann.

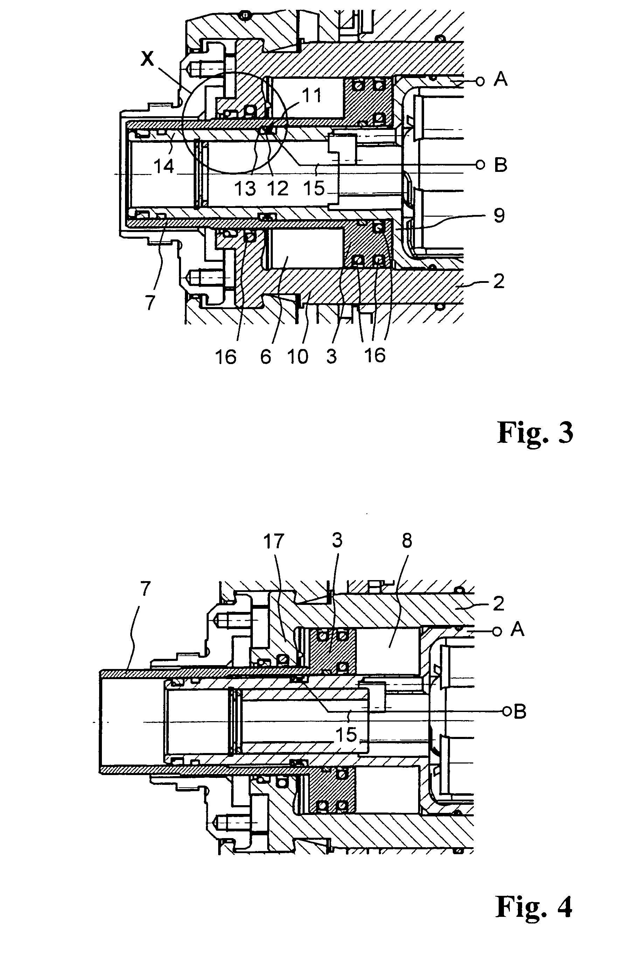

Eine erste Ausführungsform einer Werkzeugspannvorrichtung, die keinen Teil der Erfindung bildet, mit einem Sensor zur Erfassung der Position des Werkzeuglösekolbens wird nachfolgend anhand der Figuren 3 bis 5 erläutert. Dabei zeigt Fig. 3 wie zuvor Fig. 1 einen Ausschnitt aus einer Werkzeugspannvorrichtung der hier zugrundegelegten Art. Jedoch sind gegenüber Fig. 1 einige Komponenten, darunter insbesondere die Zugstange 1, weggelassen und dafür die verbleibenden Komponenten detailgetreuer dargestellt. Erfindungsgemäß fungiert der Werkzeuglösekolben 3 als Bestandteil eines elektrischen Schalters, wie nachfolgend beschrieben wird. Zur Ausbildung dieses Schalters ist die Rückwand 9 des Zylinders 2 elektrisch kontaktiert und zu einer externen Anschlussklemme A geführt. Die Rückwand 9 des Zylinders 2 ist hier im Gegensatz zu der Prinzipskizze von Fig. 1 ein von der Seitenwand 10 separates Teil, da der Zylinder 2 zur Einführung des Werkzeuglösekolbens 3 an einer Seite offen sein muss.

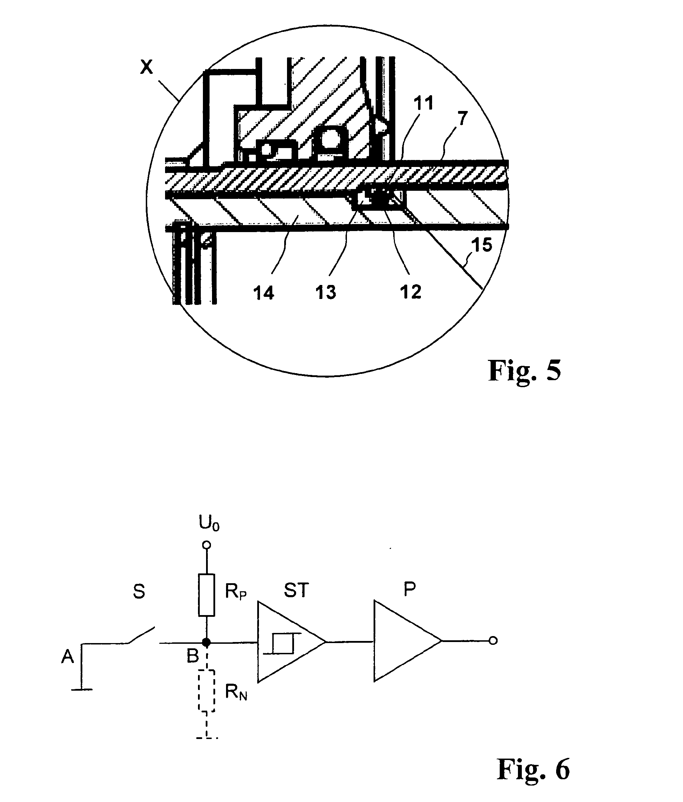

Der Werkzeuglösekolben 3 ist im Bereich seines in Richtung der Zugstange, d.h. in der Darstellung der Figuren 3 und 4 horizontal nach links ragenden hohlzylindrischen Abschnitts 7 durch einen metallischen Schleifring 11 elektrisch kontaktiert. Dieser Schleifring 11 ist über einen elastischen Isolierring 12, beispielsweise einen O-Ring aus isolierendem Material, innerhalb einer ringförmigen Nut 13 gelagert, welche in einem koaxial zu dem Abschnitt 7 liegenden und diesen bei einer Bewegung führenden, ebenfalls hohlzylinderförmigen Führungskörper 14 ausgebildet ist. Der Führungskörper 14 ist hier im Gegensatz zu der Prinzipskizze von Fig. 1 ein separates Teil, er ist jedoch mit der Rückwand 9 verbunden. Durch den Isolierring 12 ist der Schleifring 11 von dem Führungskörper 14 elektrisch isoliert. Der Isolierring 12 übt ferner eine radial nach außen gerichtete Kraft auf den Schleifring 11 aus und drückt ihn von innen gegen den Abschnitt 7 des Werkzeuglösekolbens 3. Von dem Schleifring 11 aus führt eine isolierte Leitung 15 zu einer externen Anschlussklemme B. Zur Verdeutlichung ist der in Fig. 3 mit dem Buchstaben X gekennzeichnete Ausschnitt in Fig. 5 vergrößert dargestellt.

Der mechanische Kontakt des Werkzeuglösekolbens 3 mit der Rückwand 9 des Zylinders 2 in der in Fig. 3 gezeigten Endstellung schafft zugleich einen elektrischen Kontakt zwischen diesen beiden metallisch leitenden Komponenten, wodurch sich weiter über den hohlzylindrischen Abschnitt 7, den Schleifring 11 und die Leitung 15 insgesamt eine elektrische Verbindung zwischen den Anschlussklemmen A und B ergibt, falls sich der Werkzeuglösekolben 3 in der in Fig. 3 dargestellten rechten Endposition befindet, in welcher er sicher keinen mechanischen Kontakt mit der Zugstange hat und sich die Werkzeugspannvorrichtung folglich im Spannzustand befinden muss. Sobald sich der Werkzeuglösekolben 3 von der Rückwand 9 des Zylinders 2 entfernt, wird dort der elektrische Kontakt und damit die leitende Verbindung zwischen den Anschlussklemmen A und B unterbrochen.

Es liegt also ein Positionssensor in Form eines elektrischen Schalters vor, dessen geschlossener Zustand die rechte Endstellung des Werkzeuglösekolbens 3 und somit die Spannstellung der Werkzeugspannvorrichtung zuverlässig anzeigt. Die besondere Zuverlässigkeit dieser Anzeige beruht darauf, dass der Werkzeuglösekolben 3 einen integralen Bestandteil des Schalters bildet, indem er unmittelbar eine Kontaktelektrode des Schalters darstellt und den bei geschlossenem Schalter fließenden Strom selbst leitet.

Eine Voraussetzung für die Funktion des Sensors ist es, dass der elektrische Kontakt zwischen dem Werkzeuglösekolben 3 und dem Zylinder 2 nur an der Rückwand 9 des Zylinders 2 geschlossen werden kann. Im Falle eines hydraulischen oder pneumatischen Antriebs des ring- bzw. hohlzylinderförmigen Werkzeuglösekolbens 3 sind an dessen innerer und äußerer Mantelfläche jeweils mehrere elastische Dichtungsringe 16 angeordnet, um die für die Funktion des Antriebs erforderliche Abdichtung zu schaffen. Nötig ist eine solche Abdichtung sowohl zwischen den zwei durch die Position des Werkzeuglösekolbens 3 innerhalb des Zylinders 2 definierten ringförmigen Kammern 6 (Fig. 3) und 8 (Fig. 4), als auch im Bereich des hohlzylindrischen Abschnitts 7 zwischen der vorderen ringförmigen Kammer 6 und der Umgebung. Eine weitere Funktion der Dichtungsringe besteht in der gleitenden Lagerung des Werkzeuglösekolbens 3 in dem Zylinder 2.

Die Dichtungsringe 16 bestehen aus isolierendem Material und bewirken somit zugleich eine elektrische Isolation des Werkzeuglösekolbens 3 gegenüber dem Zylinder 2 sowie auch gegenüber dem Führungskörper 14, der mechanisch und dadurch auch elektrisch mit der Rückwand 9 des Zylinders 2 verbunden ist. Zusätzlich zu den für die Funktion des Antriebs, also zur Abdichtung, erforderlichen Dichtungsringen 16 können weitere Isolationsringe an geeigneten Stellen, beispielsweise im vorderen Bereich des hohlzylindrischen Abschnitts 7 und des Führungskörpers 14 vorgesehen sein, um einen elektrisch leitenden Kontakt des Abschnitts 7 im Bereich seiner inneren und äußeren Mantelflächen mit dem Zylinder 2 sicher zu vermeiden. Es versteht sich, dass das Medium zum Antrieb des Werkzeuglösekolbens 3 bei dieser Ausführungsform der Erfindung in jedem Fall nichtleitend sein muss.

Fig. 4 zeigt den Ausschnitt aus einer Werkzeugspannvorrichtung von Fig. 3 mit dem Werkzeuglösekolben 3 in seiner anderen Endstellung, in der er so weit wie möglich nach vorne, d.h. in der Darstellung der Figuren 3 und 4 nach links verschoben ist, und in welcher der hohlzylindrische Abschnitt 7 die nicht gezeigte Zugstange zur Lösung der Werkzeugspannung auslenkt. Diese Stellung des Werkzeuglösekolbens 3 entspricht der in Fig. 2 gezeigten Lösestellung. Wie aus Fig. 4 ersichtlich ist, berührt der Werkzeuglösekolben 3 in dieser Stellung die Vorderwand 17 des Zylinders 2 nicht, sondern er hat noch einen gewissen Abstand von ihr, so dass in dieser Endstellung im Gegensatz zur anderen kein elektrischer Kontakt zwischen dem Werkzeuglösekolben 3 und dem Zylinder 2 und folglich keine leitende Verbindung zwischen den Anschlussklemmen A und B besteht. Dies wird durch einen mechanischen Anschlag bewirkt, welcher den Bewegungsbereich der Zugstange 1 und damit auch des Werkzeuglösekolbens 3 in Richtung der Werkzeugaufnahme, d.h. in Fig. 4 nach links begrenzt. Durch eine geeignete Maßnahme wie beispielsweise die Anordnung einer isolierenden Scheibe auf dem hinteren Ende der Zugstange muss ein elektrischer Kontakt zwischen dem Werkzeuglösekolben 3 und der Zugstange verhindert werden, falls die Zugstange nicht ihrerseits von dem Zylinder 2 elektrisch isoliert gelagert ist.

Wie Fig. 6 zeigt, kann die Auswertung der Schalterstellung in einfacher Weise durch die Anschaltung des Eingangs eines Schmitt-Triggers ST und eines Pull-up-Widerstandes R_{P} zur Versorgungsspannung U₀ der Auswertungselektronik an der Anschlussklemme B erfolgen. Die Anschlussklemme A ist über den Zylinder 2 mit der gesamten übrigen metallischen Werkzeugspannvorrichtung und über die Arbeitsspindel, in welcher die Werkzeugspannvorrichtung eingebaut ist, mit der Masse der Bearbeitungsmaschine verbunden. Dies bedeutet, dass die Anschlussklemme B bei geöffnetem Schalter S durch den Pull-up-Widerstand R_{P} auf der Versorgungsspannung U₀ der Auswertungselektronik und bei geschlossenem Schalter S auf der Masse der Bearbeitungsmaschine liegt, sofern der gestrichelt eingezeichnete Widerstand R_{N} nach Masse, auf den später noch eingegangen wird, nicht vorhanden ist. Der Schalter S ist also nicht potentialfrei, sondern schaltet beim Schließen stets nach Masse. Durch den Schmitt-Trigger ST und dessen Eingangskapazität wird der Schalter S entprellt und ein digitales Ausgangssignal bereitgestellt, das der Maschinensteuerung zur Verarbeitung zugeführt werden kann. Dabei kann nach dem Schmitt-Trigger ST noch ein Pegelwandler P vorgesehen sein.

Infolge Abrieb und Verschmutzung bei längerem Betrieb kann die Isolationswirkung der Dichtungsringe 16 und/oder weiterer Isolationsringe nachlassen und eine gewisse elektrische Leitfähigkeit zwischen dem Werkzeuglösekolben 3 und dem Zylinder 2 entstehen, auch wenn sich der Werkzeuglösekolben 3 gerade nicht in Kontakt mit der Rückwand 9 des Zylinders 2 befindet. Eine solche Leitfähigkeit ist für die Funktion des erfindungsgemäßen Positionssensors tolerierbar, wenn die Verbindung zwischen dem Werkzeuglösekolben 3 und dem Zylinder 2 abseits der Kontaktposition an der Rückwand 9 des Zylinders 2 zumindest so hochohmig ist, dass das Erreichen der Kontaktposition noch sicher detektiert werden kann.

Im Fall der Auswerteschaltung nach Fig. 6 mit einem Schmitt-Trigger ST und einem Pull-up-Widerstand R_{P} zur Versorgungsspannung U₀ an der Anschlussklemme B bedeutet dies, dass der durch die unvollkommene Isolation zwischen dem Werkzeuglösekolben 3 und dem Zylinder 2 bedingte, in Fig. 6 gestrichelt dargestellte Widerstand R_{N} zwischen der Anschlussklemme B und Masse zusammen mit dem Pull-up-Widerstand R_{P} einen Spannungsteiler bildet und die Anschlussklemme B somit abseits der Kontaktposition des Werkzeuglösekolbens 3, d.h. bei offenem Schalter S, durch den Pull-up-Widerstand R_{P} nicht auf die Versorgungsspannung U₀ gezogen wird, sondern auf einer durch das Teilerverhältnis von R_{P} und R_{N} bestimmten, niedrigeren Spannung liegt. Diese Spannung muss noch ausreichend weit oberhalb der Schaltschwelle des Schmitt-Triggers ST liegen, dass dieser sicher erst beim Schließen des Schalters S umschaltet. Ob ein bestimmter Wert von R_{N} hochohmig genug ist, kommt also bei der Schaltung nach Fig. 6 auf das Teilerverhältnis des durch R_{P} und R_{N} gebildeten Spannungsteilers an.

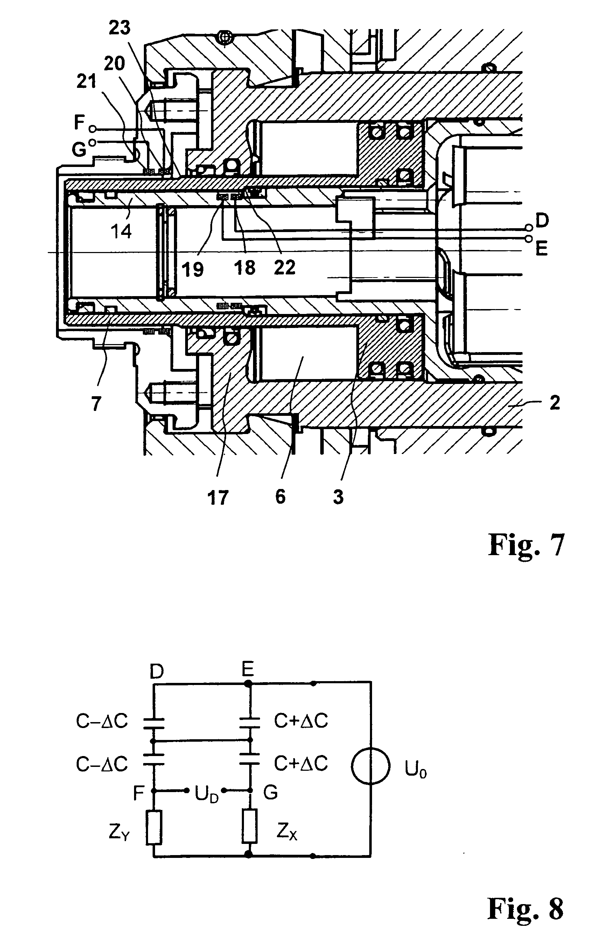

Ein Ausführungsbeispiel der Erfindung zeigt schematisch Fig. 7, wobei die dortige Teilansicht einer Werkzeugspannvorrichtung derjenigen von Fig. 3 entspricht, also die Spannstellung mit dem Werkzeuglösekolben 3 in seiner hinteren Endstellung darstellt. Wie in Fig. 7 erkennbar ist, sind im Bereich des hohlzylindrischen, in Richtung der Zugstange ragenden Abschnitts 7 des Werkzeuglösekolbens 3 sowohl innerhalb, als auch außerhalb des Hohlzylinders jeweils zwei ringförmige Kondensatorelektroden 18 und 19 bzw. 20 und 21 in axialer Richtung nebeneinander und benachbart zueinander angeordnet, wobei zwischen den beiden innen liegenden Elektroden 18 und 19 und den beiden außen liegenden Elektroden 20 und 21 ein vorbestimmter Abstand in axialer Richtung besteht.

Die Kondensatorelektroden 18 bis 21 sind ähnlich wie der Isolierring 12 der ersten Ausführungsform jeweils in eigens dafür ausgebildeten ringförmigen Nuten angeordnet, die in Fig. 7 der Einfachheit halber nicht dargestellt sind, und gegenüber dem Führungskörper 14 notwendigerweise elektrisch isoliert. Wie Fig. 7 zu entnehmen ist, überdeckt der hohlzylindrische Abschnitt 7 des Werkzeuglösekolbens 3 sämtliche Kondensatorelektroden 18 bis 21 und bildet somit einerseits mit den beiden innen liegenden Elektroden 18 und 19 und andererseits mit den beiden außen liegenden Elektroden 20 und 21 jeweils eine Serienschaltung von zwei Kondensatoren zwischen den isoliert nach außen geführten Anschlüssen D und E bzw. F und G.

Wie Fig. 7 weiterhin zeigt, weist der hohlzylindrische Abschnitt 7 zwei gegeneinander in axialer Richtung versetzte Stufen 22 und 23 auf, an denen sich jeweils der Querschnitt ändert. Die Stufe 22 befindet sich weiter hinten, d.h. in Fig. 7 rechts auf der Innenseite und die Stufe 23 weiter vorne, d.h. in Fig. 7 links auf der Außenseite des Abschnitts 7. Hierdurch ergibt sich zwischen den beiden Stufen 22 und 23 eine größere Dicke als rechts von der Stufe 22 und links von der Stufe 23. Die Kondensatorelektroden 18 bis 21 sind relativ zu den Stufen 22 und 23 so angeordnet, dass sich bei einer Verschiebung des Werkzeuglösekolbens in axialer Richtung die hintere Stufe 22 über die innenseitigen Elektroden 18 und 19 und die vordere Stufe 23 über die außenseitigen Elektroden 20 und 21 hinweg bewegt, wodurch sich die jeweiligen Elektrodenabstände der in Serie geschalteten Kondensatoren und damit die Kapazitätswerte ändern.

Durch die Richtung der beiden Stufen 22 und 23 bewirkt eine Verschiebung des Werkzeuglösekolbens 3 in Richtung der Zugstange, also die Bewegung in die Lösestellung, einerseits eine Vergrößerung des Elektrodenabstandes und damit eine Kapazitätsabnahme der innenseitigen Kondensatoren mit den Elektroden 18 und 19, andererseits eine Verringerung des Elektrodenabstandes und damit eine Kapazitätszunahme der außenseitigen Kondensatoren mit den Elektroden 20 und 21. Eine Verschiebung des Werkzeuglösekolbens 3 in der entgegengesetzten Richtung bewirkt entsprechend umgekehrte Kapazitätsänderungen.

Ferner sind die Positionen sowie der axiale Abstand der beiden Stufen 22 und 23 und die Positionen sowie der axiale Abstand des innenseitigen Elektrodenpaares 18, 19 und des außenseitigen Elektrodenpaares 20, 21 so aufeinander abgestimmt, dass bei einer Verschiebung des Werkzeuglösekolbens 3 in axialer Richtung eine Abnahme der innenseitigen Kapazität mit einer gleichzeitigen Zunahme der außenseitigen Kapazität einhergeht und umgekehrt. Außerdem sind besagte Abstände und Positionen so gewählt, dass in jeder der beiden Endstellungen des Werkzeuglösekolbens 3 eines der beiden Elektrodenpaare 18, 19 bzw. 20, 21 gerade seine minimale und das jeweils andere gerade seine maximale Kapazität erreicht.

In Fig. 7 kommen die vorausgehend beschriebenen Dimensionierungsregeln darin zum Ausdruck, dass sich in der dort gezeigten hinteren Endstellung des Werkzeuglösekolbens 3 die hintere Stufe 22 auf der Innenseite des Abschnitts 7 knapp rechts neben dem inneren Elektrodenpaar 18, 19 und die vordere Stufe 23 auf der Außenseite des Abschnitts 7 knapp rechts neben dem äußeren Elektrodenpaar 20, 21 befindet, womit die Gesamtkapazität des inneren Elektrodenpaares 18, 19 zwischen den Anschlüssen D und E gerade ihren Maximalwert und diejenige des äußeren Elektrodenpaares 20, 21 zwischen den Anschlüssen F und G gerade ihren Minimalwert erreicht.

In der nicht gezeigten vorderen Endposition des Werkzeuglösekolbens 3 würde sich die hintere Stufe 22 auf der Innenseite des Abschnitts 7 knapp links neben dem inneren Elektrodenpaar 18, 19 und die vordere Stufe 23 auf der Außenseite des Abschnitts 7 knapp links neben dem äußeren Elektrodenpaar 20, 21 befinden, womit die Gesamtkapazität des inneren Elektrodenpaares 18, 19 zwischen den Anschlüssen D und E gerade ihren Minimalwert und diejenige des äußeren Elektrodenpaares 20, 21 zwischen den Anschlüssen F und G gerade ihren Maximalwert erreichen würde. Dazu ist anzumerken, dass der Verschiebungsweg des Werkzeuglösekolbens 3 nicht der gesamten axialen Länge der vorderen Kammer 6 entspricht, da der Werkzeuglösekolben 3, wie zuvor erwähnt, in der vorderen Endstellung nicht an der Vorderwand 17 des Zylinders 2 anschlägt.

Es liegt also ein Positionssensor in Form einer Kapazitätsanordnung mit mehreren gegenläufig veränderlichen Kapazitäten vor, wobei ein Satz von Extremwerten der Kapazitäten das Vorliegen der hinteren Endstellung des Werkzeuglösekolbens 3 und somit der Spannstellung der Werkzeugspannvorrichtung zuverlässig anzeigt. Die besondere Zuverlässigkeit dieser Anzeige beruht darauf, dass ein Abschnitt 7 des Werkzeuglösekolbens 3 einen integralen Bestandteil der Kapazitätsanordnung in Form einer mehreren Kondensatoren gemeinsamen Elektrode bildet.

Ein besonderer Vorteil der vorausgehend beschriebenen Anordnung mehrerer Kondensatoren im Vergleich zu einem einzelnen Kondensator ist bessere Messbarkeit einer Kapazitätsänderung gegenüber den durch die metallische Umgebung bedingten großen Streukapazitäten. Offset- und Störgrößen lassen sich dadurch rechnerisch in gewissem Umfang eliminieren. Eine zur Auswertung geeignete Messschaltung in Form einer Brückenschaltung zeigt Fig. 8. Dabei sind die innenseitige und die außenseitige Serienschaltung von Kapazitäten in zueinander, parallele, einander nicht diagonal gegenüberliegende Brückenzweige geschaltet, um durch die gleichzeitige Abnahme und Zunahme der untereinander gleich großen Kapazitätswerte C um einen jeweils gleichen Betrag ΔC eine maximal mögliche Wirkung auf die Diagonalspannung zu erzielen.

Da der jeweils als Kondensatorelektrode wirksame Abschnitt 7 des Werkzeuglösekolbens 3 metallisch leitend ist, besteht eine Querverbindung zwischen den beiden kapazitiven Brückenzweigen, durch die zwei der Kondensatoren parallel zueinander und in Serie zu der Brücke geschaltet sind. Die Grundkonfiguration einer Halbbrücke bleibt jedoch erhalten. Die Anschlüsse D bis G der Kapazitäten aus Fig. 7 sind in Fig. 8 entsprechend gekennzeichnet. Mit den Kapazitäten sind zwei geeignete Impedanzen Z_{X} und Z_{Y} zusammengeschaltet, um insgesamt eine Brückenschaltung zu erhalten.

Obgleich die Verwendung mehrerer durch eine Bewegung des Werkzeuglösekolbens 3 gegenläufig veränderlicher Kapazitäten und deren Zusammenschaltung in einer Brücke als besonders vorteilhaft erscheint, kann eine Bewegung des Werkzeuglösekolbens 3 grundsätzlich auch anhand der Messung einer veränderlichen Einzelkapazität, d.h. nur der durch die Elektroden 18, 19 oder 20, 21 und jeweils den Abschnitt 7 des Werkzeuglösekolbens 3 gebildeten Kapazität detektiert werden, oder es können zwei separate Messungen an zwei veränderlichen Einzelkapazitäten vorgenommen werden, ohne dass diese in einer Brücke zusammengeschaltet werden müssen.

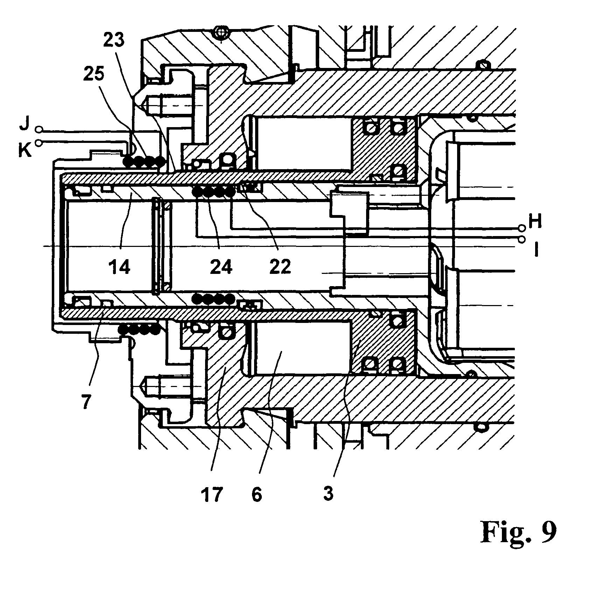

Ein drittes Ausführungsbeispiel einer Werkzeugspannvorrichtung, die keinen Teil der Erfindung bildet, mit einem Sensor zur Erfassung der Position des Werkzeuglösekolbens zeigt schematisch Fig. 9, wobei die dortige Teilansicht einer Werkzeugspannvorrichtung ebenfalls derjenigen von Fig. 3 entspricht, also die Spannstellung mit dem Werkzeuglösekolben 3 in seiner hinteren Endstellung darstellt. Wie in Fig. 9 erkennbar ist, sind im Bereich des hohlzylindrischen, in Richtung der Zugstange ragenden Abschnitts 7 des Werkzeuglösekolbens 3 sowohl innerhalb, als auch außerhalb des Hohlzylinders jeweils eine Spule 24 bzw. 25 in einem vorbestimmten axialen Abstand voneinander angeordnet.

Die Spulen 24 und 25 sind ebenso wie der Isolierring 12 der ersten Ausführungsform jeweils in eigens dafür ausgebildeten ringförmigen Nuten angeordnet, die in Fig. 9 der Einfachheit halber nicht dargestellt sind. Durch Anwendung hochpermeablen Materials als Spulenkörper, d.h. Auskleiden besagter Nuten mit solchem Material kann das Eindringen des Magnetfeldes in das umgebende Material des Führungskörpers 14 weitgehend verhindert werden, um den beabsichtigten, nachfolgend beschriebenen Messeffekt zu verbessern. Wie Fig. 9 zu entnehmen ist, überdeckt der hohlzylindrische Abschnitt 7 des Werkzeuglösekolbens 3 beide Spulen 24 und 25 und bildet für jede von ihnen einen Magnetkern, was voraussetzt, dass er aus einem ferromagnetischen Material besteht. Die Anschlüsse der Spulen sind isoliert nach außen geführt und mit H und I bzw. J und K gekennzeichnet.

Wie Fig. 9 weiterhin zeigt, weist der hohlzylindrische Abschnitt 7 ebenso wie bei dem zweiten Ausführungsbeispiel zwei gegeneinander in axialer Richtung versetzte Stufen 22 und 23 auf, an denen sich jeweils der Querschnitt ändert. Die Stufe 22 befindet sich weiter hinten, d.h. in Fig. 9 rechts auf der Innenseite und die Stufe 23 weiter vorne, d.h. in Fig. 9 links auf der Außenseite des Abschnitts 7. Hierdurch ergibt sich zwischen den beiden Stufen 22 und 23 eine größere Dicke als rechts von der Stufe 22 und links von der Stufe 23. Die Spulen 24 und 25 sind relativ zu den Stufen 22 und 23 so angeordnet, dass sich bei einer Verschiebung des Werkzeuglösekolbens 3 in axialer Richtung die hintere Stufe 22 über die innenseitige Spule 24 und die vordere Stufe 23 über die außenseitige Spule 25 hinweg bewegt, wodurch sich die jeweiligen Induktivitätswerte ändern.

Durch die Richtung der beiden Stufen 22 und 23 bewirkt eine Verschiebung des Werkzeuglösekolbens 3 in Richtung der Zugstange, also die Bewegung in die Lösestellung, einerseits eine Vergrößerung des Abstandes des als Magnetkern wirksamen Abschnitts 7 von der innenseitigen Spule 24 und damit eine Induktivitätsabnahme, andererseits eine Verringerung des Abstandes des als Magnetkern wirksamen Abschnitts 7 von der außenseitigen Spule 25 und damit eine Induktivitätszunahme. Eine Verschiebung des Werkzeuglösekolbens 3 in der entgegengesetzten Richtung bewirkt entsprechend umgekehrte Induktivitätsänderungen.

Ferner sind die Positionen sowie der axiale Abstand der beiden Stufen 22 und 23 und die Positionen sowie der axiale Abstand der innenseitigen Spule 24 und der außenseitigen Spule 25 so aufeinander abgestimmt, dass bei einer Verschiebung des Werkzeuglösekolbens 3 in axialer Richtung eine Abnahme der innenseitigen Induktivität mit einer gleichzeitigen Zunahme der außenseitigen Induktivität einhergeht und umgekehrt. Außerdem sind besagte Abstände und Positionen so gewählt, dass in jeder der beiden Endstellungen des Werkzeuglösekolbens 3 eine der beiden Spulen 24 bzw. 25 gerade ihre minimale und die jeweils andere gerade ihre maximale Induktivität erreicht.

In Fig. 9 kommen die vorausgehend beschriebenen Dimensionierungsregeln darin zum Ausdruck, dass sich in der dort gezeigten hinteren Endstellung des Werkzeuglösekolbens 3 die hintere Stufe 22 auf der Innenseite des Abschnitts 7 knapp rechts neben der inneren Spule 24 und die vordere Stufe 23 auf der Außenseite des Abschnitts 7 knapp rechts neben der äußeren Spule 25 befindet, womit die Induktivität der inneren Spule 24 gerade ihren Maximalwert und diejenige der äußeren Spule gerade ihren Minimalwert erreicht.

In der nicht gezeigten vorderen Endposition des Werkzeuglösekolbens 3 würde sich die hintere Stufe 22 auf der Innenseite des Abschnitts 7 knapp links neben der inneren Spule 24 und die vordere Stufe 23 auf der Außenseite des Abschnitts 7 knapp links neben der äußeren Spule 25 befinden, womit die Induktivität der inneren Spule 24 gerade ihren Minimalwert und diejenige der äußeren Spule 25 gerade ihren Maximalwert erreichen würde. Dazu ist wiederum anzumerken, dass der Verschiebungsweg des Werkzeuglösekolbens 3 nicht der gesamten axialen Länge der vorderen Kammer 6 entspricht, da der Werkzeuglösekolben 3, wie zuvor erwähnt, in der vorderen Endstellung nicht an der Vorderwand 17 des Zylinders 2 anschlägt.

Es liegt also ein Positionssensor in Form einer Induktivitätsanordnung mit mehreren gegenläufig veränderlichen Induktivitäten vor, wobei ein Satz von Extremwerten der Induktivitäten das Vorliegen der hinteren Endstellung des Werkzeuglösekolbens 3 und somit der Spannstellung der Werkzeugspannvorrichtung zuverlässig anzeigt. Die besondere Zuverlässigkeit dieser Anzeige beruht darauf, dass ein Abschnitt 7 des Werkzeuglösekolbens 3 einen integralen Bestandteil der Induktivitätsanordnung in Form eines mehreren Spulen gemeinsamen Magnetkerns bildet.

Ein besonderer Vorteil der vorausgehend beschriebenen Anordnung mehrerer Spulen im Vergleich zu einer einzelnen Spule ist bessere Messbarkeit einer Induktivitätsänderung gegenüber den durch die Umgebung mit ferromagnetischem Metall bedingten großen Streuinduktivitäten. Offset- und Störgrößen lassen sich dadurch in gewissem Umfang rechnerisch eliminieren. Zur Auswertung eignet sich bei dieser Ausführungsform ebenfalls besonders eine Messschaltung in Form einer Brückenschaltung mit einer zu Fig. 8 analogen Schaltung der innen- und außenseitigen Induktivitäten in zueinander parallelen, einander nicht diagonal gegenüberliegende Brückenzweigen, um durch die gleichzeitige Abnahme und Zunahme untereinander gleich großer Induktivitätswerte L um einen jeweils gleichen Betrag ΔL eine maximal mögliche Wirkung auf die Diagonalspannung zu erzielen. Da der jeweils als Magnetkern wirksame Abschnitt 7 des Werkzeuglösekolbens 3 beide Spulen 24 und 25 überdeckt, existiert in diesem Fall eine Gegeninduktivität zwischen den beiden induktiven Brückenzweigen, die bei der Auslegung der Schaltung ggf. zu berücksichtigen ist. Es könnte aber auch hier grundsätzlich mit nur einer einzigen Messinduktivität gearbeitet werden, oder es könnten separate Messungen an zwei veränderlichen Einzelinduktivitäten vorgenommen werden.

Aus der vorausgehenden Beschreibung ergeben sich für den Fachmann eine Reihe von Variationsmöglichkeiten. Solche Abwandlungen liegen im Ermessen des Fachmannes und sollen vom Schutz der Ansprüche umfasst sein.

## Patentansprüche

1. Werkzeugspannvorrichtung, insbesondere für eine Arbeitsspindel einer Bearbeitungsmaschine, mit einem Betätigungsglied (3), welches durch einen Antrieb zwischen einer ersten Position, in der sich die Werkzeugspannvorrichtung in Spannstellung befindet, und einer zweiten Position, in der sich die Werkzeugspannvorrichtung in Lösestellung befindet, verschiebbar ist, wobei zur Erfassung einer Position des Betätigungsgliedes (3) ein Sensor in Form mindestens eines elektrischen Bauelementes vorgesehen ist, der konstruktiv in die Werkzeugspannvorrichtung integriert ist, und dass zumindest ein Abschnitt des Betätigungsgliedes (3) unmittelbar eine Komponente des mindestens einen elektrischen Bauelementes bildet und seine Position eine elektrische Eigenschaft dieses Bauelementes beeinflusst, und wobei das Bauelement mindestens eine elektrische Kapazität ist, deren Wert von der Position des Betätigungsgliedes (3) abhängt, indem zumindest ein Abschnitt (7) des Betätigungsgliedes (3) elektrisch leitend ist und mindestens eine Elektrode der Kapazität bildet, **dadurch gekennzeichnet, dass** die Kapazität zwei ringförmige, zueinander koaxiale und in axialer Richtung nebeneinander angeordnete Elektroden (18, 19; 20, 21) mit externen Anschlüssen (D, E; F, G) aufweist, dass ein zylindrischer oder hohlzylindrischer, elektrisch leitender Abschnitt (7) des Betätigungsgliedes (3) die Elektroden (18, 19; 20, 21) koaxial überdeckt und dadurch mit diesen eine Serienschaltung von zwei Kapazitäten bildet, und dass der Querschnitt des die Elektroden (18, 19; 20, 21) überdeckenden Abschnitts (7) des Betätigungsgliedes (3) in axialer Richtung so variiert, dass die Werte der Kapazitäten von der axialen Position des Abschnitts (7) abhängen..

2. Werkzeugspannvorrichtung nach Anspruch 1, **dadurch gekennzeichnet, dass** zwei in axialer Richtung voneinander beabstandete Serienschaltungen von je zwei Kapazitäten vorgesehen sind, und dass die axiale Variation des Querschnitts des die Elektroden (18, 19; 20, 21) überdeckenden Abschnitts (7) des Betätigungsgliedes (3) so verläuft, dass in einer der beiden Endstellungen die Gesamtkapazität der einen Serienschaltung und in der anderen Endstellung die Gesamtkapazität der anderen Serienschaltung den größeren Wert hat.

3. Werkzeugspannvorrichtung nach Anspruch 2, **dadurch gekennzeichnet, dass** der Abschnitt (7) des Betätigungsgliedes (3) hohlzylindrisch ist, dass eine der beiden Gesamtkapazitäten auf der Innenseite und die andere auf der Außenseite des Hohlzylinders angeordnet ist, und dass die Variation des Querschnitts in zwei in axialer Richtung gegeneinander versetzten Stufen (22, 23) besteht, von denen sich eine auf der Innenseite und die andere auf der Außenseite befindet.

4. Werkzeugspannvorrichtung nach Anspruch 2 oder 3, **dadurch gekennzeichnet, dass** die beiden Serienschaltungen von Kapazitäten in zwei zueinander parallelgeschalteten, nicht diagonal gegenüberliegenden Zweigen einer Brückenschaltung angeordnet sind, und dass die Variation des Querschnitts des die Elektroden überdeckenden Abschnitts (7) des Betätigungsgliedes (3) bezüglich der Elektroden (18, 19,20,21) so verläuft, dass bei einer Bewegung des Betätigungsgliedes (3) stets zugleich der Kapazitätswert einer der beiden Serienschaltungen zunimmt und derjenige der anderen abnimmt.

## Claims

1. Tool clamping device, in particular for a work spindle of a machine tool, with an actuating member (3) which is displaceable by a drive between a first position in which the tool clamping device is in a clamping position, and a second position in which the tool clamping device is in a releasing position, wherein a sensor is provided in the form of at least one electrical component which is constructively integrated in the tool clamping device to detect a position of the actuating member (3), and wherein at least one portion of the actuating member (3) directly forms one part of the at least one electrical component and its position influences an electrical property of this component, and wherein the component is at least one electrical capacitor the value of which depends on the position of the actuating member (3) in that at least one portion (7) of the actuating member (3) is electrically conductive and forms at least one electrode of the capacitor, **characterised in that** the capacitor exhibits two ringshaped, mutually coaxial electrodes (18, 19; 20, 21) arranged next to one another in the axial direction and having external connections (D, E; F, G), **in that** a cylindrical or hollow cylindrical electrically conducting portion (7) of the actuating member (3) covers the electrodes (18, 19; 20, 21) coaxially and thereby forms with these a series circuit of two capacitors, and **in that** the cross-section of the portion (7) of the actuating member (3) covering the electrodes (18, 19; 20, 21) varies in the axial direction so that the values of the capacitors depend on the axial position of the portion (7).

2. Tool clamping device according to claim 1, **characterised in that** two axially spaced series circuits each of two capacitors are provided, and **in that** the axial variation of the cross-section of the portion (7) of the actuating member (3) covering the electrodes (18, 19; 20, 21) is such that in one of the two end positions the total capacitance of one series circuit and in the other end position the total capacitance of the other series circuit has the greater value.

3. Tool clamping device according to claim 2, **characterised in that** the portion (7) of the actuating member (3) is a hollow cylinder, **in that** one of the two total capacitances is on the inside and the other is on the outside of the hollow cylinder, and **in that** the variation of the cross-section consists of two steps (22, 23) which are offset in relation to one another in the axial direction and one of which is located on the inside and the other on the outside.

4. Tool clamping device according to claim 2 or 3, **characterised in that** the two series circuits of capacitors are arranged in two branches of a bridge circuit which are connected in parallel with one another but do not lie diagonally opposite one another, and **in that** the variation of the cross-section of the portion (7) of the actuating member (3) covering the electrodes in relation to the electrodes (18, 19; 20, 21) is such that whenever the actuating member (3) moves the capacitance value of one of the two series circuits simultaneously increases and that of the other simultaneously decreases.

## Revendications

1. Dispositif de serrage d'outil, en particulier pour une broche de travail d'une machine d'usinage, avec un organe d'actionnement (3) qui peut être déplacé en translation par un entraînement entre une première position, dans laquelle le dispositif de serrage d'outil se trouve en position de serrage, et une deuxième position dans laquelle le dispositif de serrage d'outil se trouve en position de desserrage, sachant que pour détecter la position de l'organe d'actionnement (3), il est prévu un capteur sous la forme d'au moins un composant électrique qui est constructivement intégré dans le dispositif de serrage d'outil, et qu'au moins une partie de l'organe d'actionnement (3) constitue indirectement une composante du composant électrique au moins unique et sa position influence une propriété électrique de ce composant, et sachant que le composant est au moins un condensateur électrique dont la valeur dépend de la position de l'organe d'actionnement (3) par le fait qu'au moins une partie (7) de l'organe d'actionnement (3) est électriquement conductrice et forme au moins une électrode du condensateur, **caractérisé en ce que** le condensateur présente deux électrodes annulaires (18, 19 ; 20, 21) coaxiales entre elles, juxtaposées en direction axiale et dotées de connexions externes (D, E ; F, G), **en ce qu'**une partie électriquement conductrice (7) cylindrique ou cylindrique creuse de l'organe d'actionnement (3) recouvre coaxialement les électrodes (18, 19 ; 20, 21) et forme ainsi avec elles un montage en série de deux condensateurs, et **en ce que** la section de la partie (7) de l'organe d'actionnement (3) qui recouvre les électrodes (18, 19 ; 20, 21) varie en direction axiale de telle sorte que les valeurs des condensateurs dépendent de la position axiale de la partie (7).

2. Dispositif de serrage d'outil selon la revendication 1, **caractérisé en ce qu'**il est prévu deux montages en série distants l'un de l'autre en direction axiale, comprenant chacun deux condensateurs, et **en ce que** la variation axiale de la section de la partie (7) de l'organe d'actionnement (3) qui recouvre les électrodes (18, 19 ; 20, 21) évolue de telle sorte que la capacité totale de l'un des montages en série possède sa plus grande valeur dans l'une des deux positions finales et que la capacité totale de l'autre montage en série possède sa plus grande valeur dans l'autre position finale.

3. Dispositif de serrage d'outil selon la revendication 2, **caractérisé en ce que** la partie (7) de l'organe d'actionnement (3) est de forme cylindrique creuse, **en ce qu'**une des deux capacités totales est disposée sur le côté intérieur et l'autre sur le côté extérieur du cylindre creux, et **en ce que** la variation de la section consiste en deux gradins (22, 23) mutuellement décalés en direction axiale, dont l'un se trouve sur le côté intérieur et l'autre sur le côté extérieur.

4. Dispositif de serrage d'outil selon la revendication 2 ou 3, **caractérisé en ce que** les deux montages en série de condensateurs sont disposés dans deux branches montées en parallèle, non diagonalement opposées, d'un montage en pont, et **en ce que** la variation de la section de la partie (7) de l'organe d'actionnement (3) qui recouvre les électrodes évolue de telle sorte par rapport aux électrodes (18, 19 ; 20, 21) que, lors d'un déplacement de l'organe d'actionnement (3), il se produit toujours en même temps une augmentation de la valeur de capacité d'un des deux montages en série et une diminution de celle de l'autre.
